Europäisches Patentamt

European Patent Office

Office européen des brevets

(11) Publication number: **0 240 220**
**A2**

# (12) EUROPEAN PATENT APPLICATION

(21) Application number: 87302457.4

(51) Int. Cl.⁴: **B01D 29/38**

(22) Date of filing: 23.03.87

(30) Priority: 25.03.86 GB 8607390

(43) Date of publication of application:
07.10.87 Bulletin 87/41

(84) Designated Contracting States:
**BE DE FR GB IT**

(71) Applicant: **DOWTY MINING MACHINERY LIMITED**
**Arle Court**
**Cheltenham Glos. GL51 0TP(GB)**

(72) Inventor: **Whyte, Jon Frank Ross**
**Newhaven Littleworth**
**Greet Cheltenham, Glos, GL54 5BT(GB)**

(74) Representative: **Bousfield, Roger James**
**Patents Department Dowty Group Services**
**Limited Arle Court**
**Cheltenham, Glos. GL51 0TP(GB)**

(54) **Fluid filtering systems.**

(57) A fluid filtering system comprises two filter units l, 2 arranged in parallel so that during normal operation fluid is caused to flow through both of the filter units simultaneously.

Each of the filter units l, 2 includes a filter element 3, 4 and is provided with back-flushing means to effect cleaning of the respective filter elements 3, 4. The back-flushing means may comprise a rotaty member 5, 6 mounted within the respective filter element 3,4.

The back-flushing means may be brought into operation by the action of a sensing means which is responsive the degree of contamination of the filter units. The sensing means may also be operable to cause fluid to flow through one filter unit only whilst the back-flushing means is in operation in the other.

EP 0 240 220 A2

## "FLUID FILTERING SYSTEMS"

This invention relates to fluid filtering systems and in particular systems for use with water supply systems in a mine.

Known types of fluid filtering systems include two filter units arranged in parallel and operated so that one unit is in service and the other is out of service and vice versa. This enables the out of service unit to be cleaned and/or maintained. The cleaning of the filter unit is usually effected by back-flushing of the filter unit with a high pressure fluid.

Back flushing has, for example, been carried out using a rotary member which is provided with nozzles through which high pressure fluid can be discharged. The discharge of the high pressure fluids causes the rotary member to rotate and is normally directed so as to pass through the filter element in the direction opposite to that of normal filtering flow

The back-flushing means may be automatically operable, so that when the filter unit is sufficiently contaminated, it is by-passed for cleaning and timing means, which is provided for automatically controlling the period of time during which the back-flushing operation is permitted to continue, is activated.

When cleaned the filter unit will remain out of service until such time as the other filter unit is removed from service whereupon it will be returned to service.

A well appreciated problem encountered with this type of system, is that expensive equipment is tied up doing no beneficial work and occupying space in an area where space is at a premium.

The present invention reduces this problem drastically.

According to the present invention a fluid filtering system comprises two filter units arranged in parallel, each of which has back-flushing means to effect cleaning; and, sensing means responsive to the degree of contamination of the filter units of the system, is wherein in normal use, fluid is caused to flow through both of the filter units simultaneously and the sensing means is operable to cause fluid to flow through one filter unit only, whilst the other is out of service.

Reset means are, preferably, provided whereby following completion of the cleaning of the unit, the flow of fluid is returned to normal, i.e. simultaneous flow through both of the filter units.

The reset means may also be provided so that the other unit is automatically bypassed and cleaned on return of the unit to the system. With this arrangement of the reset means both the filter units are cleaned automatically once either of the units has become too contaminated to continue in service. If this arrangement is adopted following completion of the cleaning of the other unit, fluid flow through both of the units simultaneously will be returned.

In one preferred embodiment the sensing means includes a first two-position valve and the reset means includes a second two-position valve both of which are connected to an operator means of a three-position selector valve. The selector valve is usually disposed upstream of the parallel filter units. In its mid-position the selector valve may place the fluid source in communication with both of the filter units, whilst when in one or other of its other two positions it may place the source in communication with one of the units only.

Alternatively the means for sensing the pressure drop across the filter units may be electrical or electronic.

Each of the filter units is provided with a filter element. The filter element may be any suitable type of element, however is preferably a cylindrical porous filter element, for example a wire mesh in the form of a short tube.

The back-flushing means of each filter unit preferably comprises a rotary member disposed within the filter element and is mounted so as to rotate with respect thereto.

The rotary member preferably carries ejection means, through which high pressure fluid is discharged. The ejection means carried by the rotary member are preferably ejection nozzles, which are mounted on the rotary member so that the discharge of the high pressure fluid effects rotation of the rotary member.

The rotary member may relay on these ejection nozzles to effect the cleaning of the filter element. The rotary member, however, is preferably provided with further ejection nozzles through which high pressure fluid is discharged so as to pass through the filter element in the direction opposite to the direction of normal filtering flow therethrough and effect cleaning thereof.

The fluid filtering system may further include timing means for controlling the period over which each cleaning operation is permitted to continue.

In one of the embodiments envisaged the timing means includes a dash-pot device which is in association with a fluid flow restrictor which is operably associated with the rotary member.

A dump valve is preferably provided in conjunction with each filter unit. The dump valve may be operable in conjunction with the first two-position valve or the second two-position valve, and is activated by fluid pressure derived from a point downstream of the filter units so as to permit cleaning fluid, together with contaminant removed from the filter element, to pass to waste.

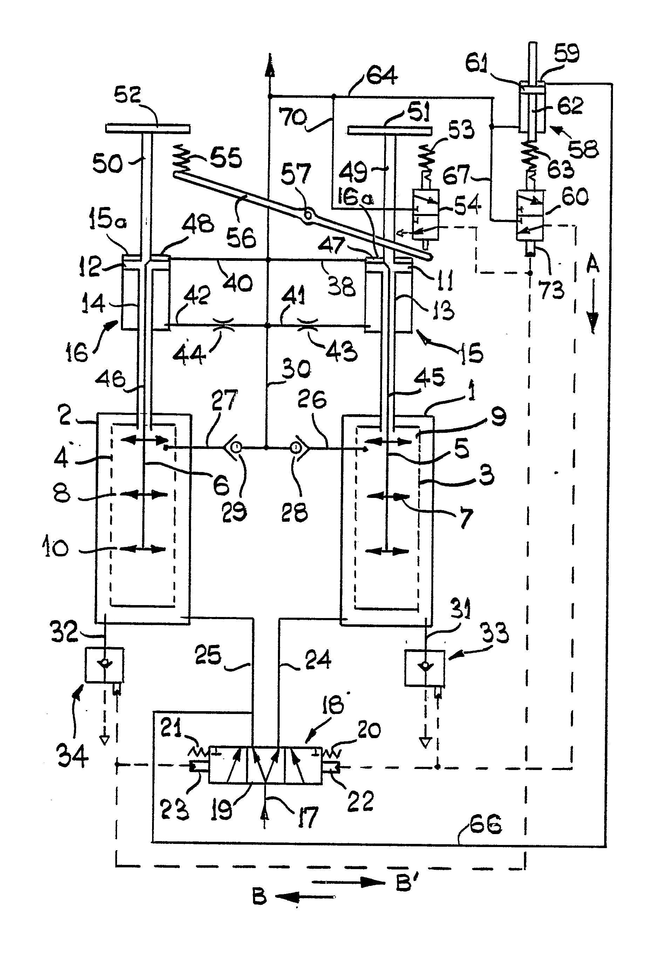

The invention is now illustrated, by way of description of a preferred embodiment with reference to the accompanying drawing which diagrammatic represents a fluid filtering system.

With reference to the drawing a fluid filtering system suitable for use in a mine, in conjunction with mine face equipment comprises two filter units l, 2 each of which filter units is provided with a cylindrical filter element 3, 4; a timing means, and each filter unit is provided with a rotary member 5, 6 disposed within a filter element and having ejection nozzles 7, 8 provided in association therewith. In operation high pressure fluid is ejected from the nozzles 7, 8 to effect rotation of the respective rotary member with respect to the respective filter element 3, 4.

Each rotary member 5, 6 is provided with further ejection means in the form of a series of nozzles 9, l0. High pressure fluid is discharged through the nozzles 9, l0 so as to pass through the respective filter element 3, 4 in the direction opposite to the direction of normal filtering flow therethrough to effect cleaning thereof.

From this, it will be appreciated that in this example the fluid being filtered will flow in a radially inward direction whilst the high pressure fluid (cleaning fluid) will pass through the filter element in a radially outward direction.

During back-flushing the rotary member 5, 6 of the filter unit being cleaned is caused to traverse the element 3, 4 by the interaction of a piston ll, l2 and a rod l3, l4 of a respective dash-pot device l5, l6. The dash-pot device also performs the function of the timing means and consequentially controls the period over which cleaning of the filter unit is allowed to proceed.

When installed, the system is connected to a fluid source (not shown) by a line l7 having a three-position selector valve l8 with a displaceable element l9 which is biassed towards a central position, (as shown in drawing) by springs 20, 21.

The displaceable element is moved in either direction by an operator means 22, 23.

In its central position the valve l8 places the conduit l7 in communication with a conduit 24 and a conduit 25 which are connected to the filter unit l and the filter 2 respectively. This means that in normal operation the flow of fluid is shared equally by the two filter units.

Having passed through the filter units l, 2 and the respective filter elements 3, 4, the liquid is discharged into respective conduits 26 and 27. Each of the conduits has a non-return valve 28, 29 and are consequentially joined together in a common delivery line 30, along which the filtered liquid passes to the mine face equipment for use.

Each filter unit l, 2 is provided with a dump valve 33, 34 which is connected to the respective filter unit l, 2 by means of respective waste lines 31, 32.

Each dash-pot device l5, l6 is connected at its end l5a, l6a by respective conduits 38, 40 to the line 30. The other ends of the dash-pot device are connected by their respective conduits 41, 42, incorporating restrictors 43, 44 respectively, to the conduit 30.

Each of the conduits 41, 42, is integral to the timing function of the respective dash pot device.

Each of the piston rods l3, l4 and therethrough rotary members 5, 6 are in communication by means of conduits 45, 46 formed within the piston rods l3, l4 with annular chambers 47, 48 of the respective dash-pot devices l5, l6 and consequentially with the conduits 38, 40 and the line 30.

Further, each of the piston rods l3, l4 has an extension portion 49, 50 projecting therefrom which at its extremity has a flange 51, 52.

When the piston ll, and thereby piston rod l3 are caused to move sufficiently, the flange 5l engages with a spring 53 of a snap action reset valve 54, which has two distinct positions of operation, eventually causing the valve to be tripped from a first position to a second position.

Now when the piston l2 and the rod l4 are moved sufficiently the flange 52 is caused to engage by means of spring 55, one end of a beam 56, pivoted at 57 to a fixed structure. The beam 56 is thereby caused to move the reset valve 54 from its second position to its first position.

The system is further provided with a sensing means 58 which comprises a piston-and-cylinder device 59 having a piston 61 and a piston rod 62, and a trigger-type sensor valve 60. When the piston 61 and piston rod 62 of the device 59 are moved in a direction A that movement is transmitted via a spring 63 to the valve 60 and causes the valve to be tripped from a first position to a second position.

The sensing means also includes a conduit 64 which is branched from conduit 30 and connected to the device 59, and a conduit 66 which is branched from the conduit 25 at a point downstream of valve l8 and connected to the device 59. The conduits 64 and 66 are connected to the device 59 so as to always be seperated by the piston 6l.

Further, a conduit 67 is branched from conduit 64 taken to the valve 60. The valve 60 is connected to the operator means 22 of valve 18 so as to enable operation of valve accordingly as well as to dump valve 33.

A further conduit 70 is branched from the conduit 64 and taken to the valve 54, which is connected to the operator means 23 of selector valve 18 and the dump valve 34.

The sensor valve 60 is provided with operator means 73 to enable the valve to be moved from its second to its first position.

In operation of the fluid filtering system, starting with the selector valve 18 in its central position (as shown in the drawing), fluid passes by means of the conduit 17 into the conduits 24 and 25 and thereby to the filter units 1 and 2. The flow of fluid through the system being shared equally between the two filter units 1, 2.

The fluid then flows through the respective filter unit passing through its filter element 3, 4. As the fluid passes through the element contaminant particles collect on a surface of the elements.

Having passed through the element the now-clean liquid passes into conduits 26, 27, and through non-return valves 28, 29 into the common delivery conduit 30.

After a period of use the filter elements 3, 4 are so contaminated that the system is not operating efficiently the sensing means 58 which causes the valve 60 to be tripped from its first to its second position. Simultaneously the element 19 of valve 18 is moved in a direction B to its left-hand position and dump valve 33 is opened. Filter unit 1 is now open to waste through dump valve 33.

The total flow is thereby caused to pass via conduit 25 to filter unit 2 only and from there to conduit 30.

Now, fluid from the conduit 30 passes through the conduit 38 into the chamber 47 and through the conduit 45 to the rotary member 5. The fluid is then ejected through nozzles 7 to effect rotation of member 5, and nozzles 9 so as to clean the element 3.

The contaminant on the element 3 is thereby removed and passes out of unit 1 through dump valve 33 via conduit 31. During cleaning of the unit 1 a pressure drop subsists across piston 11, the piston and rod 13 move in direction A with the fluid beneath the piston discharging through the conduit 41 via the restrictor 43 into conduit 30.

As the piston 11 and rod 13 reach their lowermost position the flange 51 engages the spring 53 and moves the valve 54 from its first position to its second position. In this way valve 60 is moved from its second position to its first position thereby operator means 22 is placed in communication with a reservoir and dump valve 33 is caused to close. Simultaneously the dump valve 34 is opened and element 19 of selector valve 18 is moved in a direction B′ to its right-hand position.

The flow via the conduit 17 is thereby directed through the conduit 24 and the filter unit 1, to the conduit 30. The member 5, piston 11 and rod 13 move upwardly to their position as drawn, and filter unit 2 is now open to waste through dump valve 34.

Back-flushing of element 4 takes place in a similar manner to the previous back-flushing of element 3. The rotary member 6 rotates and its piston 12 and rod 14 moving downwardly under the pressure drop occurring across the piston of the dash-pot device. Contaminant particles removed from element 4 pass with the back-flushing liquid out of unit 2 via conduit 32 and dump valve 34.

As the piston 12 and rod 14 reach their lowermost position flange 52 engages spring 55 and the beam 56 to move about pivot 57 so that valve 54 is tripped from its second position to its first position.

Operator means 23 is placed in communication with the reservoir and the springs 20, 21 move element 19 to its central position and dump valve 34 closes.

The cleaning of the filter elements 3, 4 is complete and the member 6, piston 12 and rod 14 move upwardly to their normal position.

## Claims

1. A fluid filtering system comprising two filter units arranged in parallel, each of which has back-flushing means to effect cleaning; and, sensing means responsive to the degree of contamination of the filter units of the system, is characterised in that in normal use, fluid is caused to flow through both of the filter units simultaneously and the sensing means is operable to cause fluid to flow through one filter unit only, whilst the other is out of service.

2. A fluid filtering system as claimed in claim 1, in which reset means are provided so that following completion of the cleaning of the unit, the flow of fluid is returned to normal.

3. A fluid filtering system as claimed in claim 1 or claim 2 wherein, the sensing means includes a first two-position valve and the reset means includes a second two-position valve both of which are connected to an operator means of a three-position selector valve.

4. A fluid filtering system as claimed in claim 1 or claim 2 wherein the means for sensing the pressure drop across the filter units is electrical or electronic.

5. A fluid filtering system as claimed in any one of the preceeding claims wherein a cylindrical porous filter element is provided.

6. A fluid filtering system as claimed in any one of the preceeding claims wherein the back-flushing means of each filter unit preferably comprises a rotary member disposed within the filter element and is mounted so as to rotate with respect thereto.

7. A fluid filtering system as claimed in claim 6 wherein the rotary member carries ejection means.

8. A fluid filtering system as claimed in claim 7 wherein the ejection means are ejection nozzles which are mounted to the rotary member so that the discharge of the high pressure fluid effects rotation of the rotary member.

9. A fluid filtering system as claimed in claim 8 wherein the rotary member is provided with further ejection nozzles through which high pressure fluid is discharged so as to pass through the filter element in the direction opposite to the direction of normal filtering flow therethrough the effect cleaning thereof.

l0. A fluid filtering system as claimed in any one of the preceeding claims wherein a dump valve is provided in conjunction with each filter unit.